(19) Europäisches Patentamt
European Patent Office
Office européen des brevets

(11) **EP 3 626 358 A1**

(12) **EUROPEAN PATENT APPLICATION**
published in accordance with Art. 153(4) EPC

(43) Date of publication:
**25.03.2020 Bulletin 2020/13**

(51) Int Cl.:
**B21B 45/02** [(2006.01)]     **C21D 9/00** [(2006.01)]

(21) Application number: **18859285.1**

(22) Date of filing: **13.09.2018**

(86) International application number:
**PCT/JP2018/034066**

(87) International publication number:
**WO 2019/059105 (28.03.2019 Gazette 2019/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.09.2017 JP 2017179352**

(71) Applicant: **Nippon Steel Corporation**
**Tokyo 100-8071 (JP)**

(72) Inventors:
• **SAKAMOTO, Akihiro**
**Tokyo 100-8071 (JP)**
• **YAMAGISHI, Shunsuke**
**Tokyo 100-8071 (JP)**
• **KAWAI, Masanori**
**Tokyo 100-8071 (JP)**

(74) Representative: **Vossius & Partner**
**Patentanwälte Rechtsanwälte mbB**
**Siebertstrasse 3**
**81675 München (DE)**

(54) **DEVICE AND METHOD FOR COOLING STEEL MATERIAL**

(57)     A device to cool a steel material having undergone hot rolling mills, the device including: a conveying mechanism which conveys the steel material while accelerating the steel material; a water cooling mechanism which cools the steel material while the conveying mechanism conveys the steel material; and a control unit which controls the conveying mechanism and the water cooling mechanism to cause the cooling of the steel material to satisfy Formula (1) below, wherein a water cooling time decrease rate $\gamma$ in Formula (1) below is decided based on a length of a water cooling zone where the water cooling mechanism is provided and a time $\Delta t_c(0)$ required to cool a leading end portion of the steel material down to a target temperature,

$$\Delta t_c(x) = \Delta t_c(0) - \gamma \cdot x \quad \dots \text{Formula (1)},$$

where x: a conveyance-direction position in the steel material relative to the leading end portion of the steel material serving as a reference point, and $\Delta t_c(x)$: a time required to cool a portion at the position x of the steel material down to the target temperature.

FIG.4

## Description

[Technical Field]

The present invention relates to a cooling device and a cooling method which, in the manufacture of a steel material, cool the steel material having undergone finish rolling.

[Background Art]

In the manufacture of large H-beams used as beams, pillars, and so on of buildings, a method has been developed these days that applies an accelerated cooling treatment after finish rolling to manufacture high-strength H-beams especially for use in super high-rise buildings, with a less alloy cost.

As a cooling device for applying such an accelerated cooling treatment to H-beams, those disclosed in Patent Documents 1 to 3 are known.

The cooling device of Patent Document 1 has first jetting units that cool outer sides of flange portions of an H-beam and second jetting units that cool inner sides of the flange portions and a web portion.

In the cooling device of Patent Document 2, on each of one surface side and a rear surface side of a web of an H-beam, three nozzle sets are provided respectively at the middle of the web and at two R portions on both sides of the middle of the web, with cooling waters of the three nozzle sets not interfering with one another, and three nozzle sets are further provided on an outer side of each of two flange portions, with cooling waters of the three nozzle sets not interfere with one another.

The cooling device of Patent Document 3 strongly cools outer surfaces of flanges of an H-beam with a water volume density of 1000 L/min/m$^2$ or more, cools an upper surface of a web portion with spray nozzles or mist nozzles for cooling and air jet nozzles, cools a lower surface of the web portion with spray nozzles or mist nozzles, and sets a water volume density to the web portion lower than that to the flange portions.

Further, as a method to cool a steel sheet, those disclosed in Patent Documents 4 and 5 are known, though they do not relate to the cooling of an H-beam.

Patent Document 4 discloses a method to cool a steel sheet while accelerating a sheet passage speed of the steel sheet as follows. Specifically, the cooling method of Patent Document 4 divides the steel sheet from its front end to its rear end into a plurality of segments and predicts a steel sheet thickness-direction average temperature of a cooling device input side of each of the segments, based on the temperature of the steel sheet actually measured before it is loaded to the cooling device. Then, based on the prediction results, an optimum time required to cool each of the segments is calculated, and the steel sheet is cooled while a sheet passage speed is increased by an acceleration determined based on this optimum time required for the cooling.

Patent Document 5 discloses a steel sheet cooling method that calculates conveying speeds at a cooling start time and a cooling end time and controls a steel sheet conveying speed with a constant acceleration from the cooling start to the cooling end so that cooling finish temperatures of a leading end portion and a trailing end portion of the steel sheet agree with a predetermined temperature. Further, this cooling method controls the conveying speeds at the cooling start time and the cooling end time while controlling banks of a cooling device with a predetermined cooling pattern.

[Prior Art Document]

[Patent Document]

Patent Document 1: Korean Laid-open Patent Publication No. 2013-0034216
Patent Document 2: Chinese Laid-open Patent Publication No. 103357678
Patent Document 3: Japanese Patent No. 3546300
Patent Document 4: Japanese Laid-open Patent Publication No. Sho 60-87914
Patent Document 5: Japanese Laid-open Patent Publication No. Hei 10-71416

[Disclosure of the Invention]

[Problems to Be Solved by the Invention]

Some H-beams developed these days as high-strength H-beams for super high-rise buildings have very thick flange portions. In a case where a steel material having such thick flange portions and requiring a high cooling speed is cooled while conveyed at a constant speed, the steel material is not easily cooled and accordingly the steel sheet needs to pass through a cooling zone in one pass while taking a long cooling time, resulting in a long time lapse from an instant when a leading end portion of the steel material enters the cooling zone up to an instant when its trailing end portion enters the cooling zone. The long time lapse leads to an increase in a temperature difference between the leading end portion and the trailing end portion (hereinafter, a leading-trailing end temperature difference) due to a difference in standing-to-cool time, which involves a problem of deterioration in product performance.

Any of Patent Documents 1 to 3 gives no disclosure about the aforesaid problem involved in the leading-trailing end temperature difference.

Incidentally, it is possible to prevent the occurrence of the leading-trailing end temperature difference by applying the steel sheet cooling methods of Patent Documents 4 and 5 to the cooling of the aforesaid H-beam having the flange portions with a large thickness. The cooling method of Patent Document 4, however, is complicated since it requires the repeated calculation based on the prediction of the steel sheet thickness-direction average temperature of the cooling device input side of each of the segments of the cooling-target steel sheet. Further, the cooling method of Patent Document 5 performs the convergence calculation of the conveying speed at the cooling start time, the convergence calculation of the conveying speed at the cooling end time, the optimization calculation of the cooling pattern, and so on. That is, the cooling method of Patent Document 5 performs the triple repeated calculations and thus is also complicated. As described above, in the cooling methods of Patent Documents 4 and 5, the arithmetic processing is costly because of the complicated calculations.

The present invention was made in consideration of the above problems, and has an object to provide a cooling device and a cooling method that are capable of cooling a steel material without causing a leading-trailing end temperature difference under a condition calculated by a simple method when cooling the steel sheet after finish rolling. Note that the "simple method" mentioned here implies greatly eliminating the repeated calculations disclosed in Patent Document 4, Patent Document 5, and so on to thereby reduce the arithmetic processing cost.

[Means for Solving the Problems]

To solve the aforesaid problem, the present invention provides a steel material cooling device which is a device to cool a steel material having undergone hot rolling mills, the device including: a conveying mechanism which conveys the steel material while accelerating the steel material; a water cooling mechanism which cools the steel material while the conveying mechanism conveys the steel material; and a control unit which controls the conveying mechanism and the water cooling mechanism to cause the cooling of the steel material to satisfy Formula (1) below, wherein a water cooling time decrease rate $\gamma$ in Formula (1) below is decided based on a length of a water cooling zone where the water cooling mechanism is provided and a time $\Delta t_c(0)$ required to cool a leading end portion of the steel material down to a target temperature. Note that the water cooling zone is a region from a conveyance-direction foremost portion to a rearmost portion of a cooling water collision region in the steel material when cooling water supplied from the water cooling mechanism collides with the steel material.

$$\Delta t_c(x) = \Delta t_c(0) - \gamma \cdot x \quad \text{... Formula (1)}$$

where x: a conveyance-direction position in the steel material relative to the leading end portion of the steel material serving as a reference point, and $\Delta t_c(x)$: a time required to cool a portion at the position x of the steel material down to the target temperature.

The water cooling time decrease rate $\gamma$ may satisfy Formula (2) below,

$$\gamma = p \cdot L_c^{q1} \cdot \Delta t_c(0)^{q2} \quad \text{... Formula (2),}$$

where $L_c$: the length of the water cooling zone, and p, q1, q2: constant coefficients.

The steel material may be an H-beam, and the water cooling mechanism may cool flange portions of the H-beam. The steel material cooling device may include: an air blow mechanism which sprays compressed air toward a web upper surface of the H-beam in the water cooling zone; and draining mechanism units which are provided in front of and in the rear of the water cooling zone in terms of a conveyance direction of the H-beam to drain water on the web upper surface of the H-beam to the outside of the H-beam. The draining mechanism units each may include: an air-draining mechanism which sprays air to the web upper surface of the H-beam; and a water-draining mechanism which is provided at a position closer to the water cooling zone than the air-draining mechanism to spray water to the web upper surface and a flange inner surface of the H-beam. A water volume density of cooling water of the water cooling mechanism may be 0.5 m³/min/m² or more, a jet pressure of the water of the water-draining mechanisms may be 0.1 to 0.5 MPa, and a jet pressure of the air of the air-draining mechanisms may be 0.02 to 0.3 MPa. A jet pressure of the air of the air blow mechanism may be 0.02 to 0.3 MPa.

Further, the present invention provides a steel material cooling control method which is a control method when a steel material having undergone hot rolling mills is cooled by a water cooling mechanism while the steel material is conveyed in an accelerated manner, the method including: a step of deciding a water cooling time decrease rate $\gamma$ based on a length of a water cooling zone where the water cooling mechanism is provided and a time $\Delta t_c(0)$ required to cool a leading end portion of the steel material down to a target temperature; and a step of controlling the cooling of the steel material so as to satisfy Formula (1) below using the water cooling time decrease rate $\gamma$,

$$\Delta t_c(x) = \Delta t_c(0) - \gamma \cdot x \quad \text{... Formula (1)},$$

where x: a conveyance-direction position in the steel material relative to the leading end portion of the steel material serving as a reference point, and $\Delta t_c(x)$: a time required to cool a portion at the position x of the steel material down to the target temperature.

In such a case, the water cooling time decrease rate $\gamma$ may satisfy Formula (2) below,

$$\gamma = p \cdot L_c^{q1} \cdot \Delta t_c(0)^{q2} \quad \text{... Formula (2)},$$

where $L_c$: the length of the water cooling zone and p, q1, q2: constant coefficients.

[Effect of the Invention]

According to the present invention, when a steel material is cooled after finish rolling, only by finding a water cooling time of a leading end portion of the steel material by numerical calculation or actual measurement, it is possible to decide water cooling times for positions along the whole length of the steel material without using repeated calculations, making it possible to greatly reduce an arithmetic processing cost. Further, under a condition thus decided, it is possible to cool the steel material without causing a leading-trailing end temperature difference in the steel material.

[Brief Description of the Drawings]

[FIG. 1] is a graph illustrating simulation results regarding a relation between a conveyance-direction position in an H-beam and a time required to cool its flange portions at each of the positions in the conveyance direction of the H-beam down to a target temperature.

[FIG. 2] is a graph illustrating examples of a relation between a water cooling time of the flange portions of the H-beam at a leading end portion and a water cooling time decrease rate.

[FIG. 3] is a graph used to compare simulation results with calculation results obtained based on a regression formula, regarding the water cooling time decrease rate.

[FIG. 4] is a flowchart of a cooling control method of the H-beam.

[FIG. 5] is a view illustrating a schematic configuration of a hot rolling facility including a cooling device according to an embodiment of the present invention.

[FIG. 6] is a side view schematically illustrating the cooling device according to the embodiment of the present invention.

[FIG. 7] is a sectional view of a water cooling zone seen from the A-A line in FIG. 6.

[FIG. 8] is a sectional view of a water-draining mechanism seen from the B-B line in FIG. 6.

[FIG. 9] is a sectional view of an air-draining mechanism seen from the C-C line in FIG. 6.

[Embodiments for Carrying out the Invention]

An embodiment of the present invention will be hereinafter described with reference to the drawings. Note that, in the specification and the drawings, elements having substantially the same function and configuration are denoted by the same reference signs, and a redundant description will be thereby omitted.

First, a steel material cooling control method according to this embodiment will be described. Here, a case where a steel material is an H-beam will be described. In a rolling facility of the H-beam, heating of a slab in a heating furnace, rolling of the slab in a rough rolling mill, an intermediate rolling mill, and a finish rolling mill, cooling of the H-beam in a cooling device, and sawing of the H-beam in a sawing device are sequentially performed. In the cooling device, an accelerated cooling treatment after the finish rolling is performed, and the cooling control method at this time will be hereinafter described.

The present inventors performed a simulation regarding a conveying speed and a water cooling time decrease rate (conveyance acceleration) of an H-beam in accelerated cooling treatment of the H-beam after the finish rolling, with the aim of cooling the H-beam while preventing a leading-trailing end temperature difference from occurring in flange portions of the H-beam when the aforesaid cooling device finishes the water cooling. Specifically, the simulation was performed by a one-dimensional non-steady state heat conduction analysis with only the thickness direction of the flange portions taken into consideration, regarding the water cooling time of each position in terms of a conveyance direction of the H-beam, with which cross-sectional average temperatures of the flange portions at the aforesaid positions in the H-beam from its leading end portion to its trailing end portion uniformly become the target temperature when the water cooling is finished.

As a condition of the simulation, a steel type was set to carbon steel and time from the heating furnace up to the cooling start by the cooling device, that is, a free running time, was set to sixty seconds. Further, in the simulation, a plurality of values were used as each of the thickness of the flange portions of the H-beam, the length of the H-beam, the length of a water cooling zone, water volume density, and the target temperature of the cross-sectional average temperature of the flange portions at the aforesaid positions at the end of the water cooling (hereinafter, the target temperature). However, the values used in the simulation satisfy the conditions of the thickness of the flange portion: 20 to 120 mm, the length of the H-beam: 0 to 300 m, the length of the water cooling zone: 5 to 20 m, the water volume density: 0.5 to 2.0 m$^3$/min/m$^2$, and the target temperature: 500 to 700°C. The water cooling zone is a region from a conveyance-direction foremost portion up to rearmost portion of a cooling water collision region in the H-beam when cooling water supplied from a water cooling mechanism of the cooling device collides with the H-beam. Further, in the description below, "the temperature of the flange portions" means "the cross-sectional average temperature of the flange portions".

Further, in the simulation, the H-beam having undergone 900°C rolling was conveyed while being accelerated, and the H-beam was water-cooled in one pass with the cooling water supplied to both outer surfaces and inner surfaces of the flange portions. Note that the simulation was performed on the assumption that there was no heat conduction between the web and the flanges.

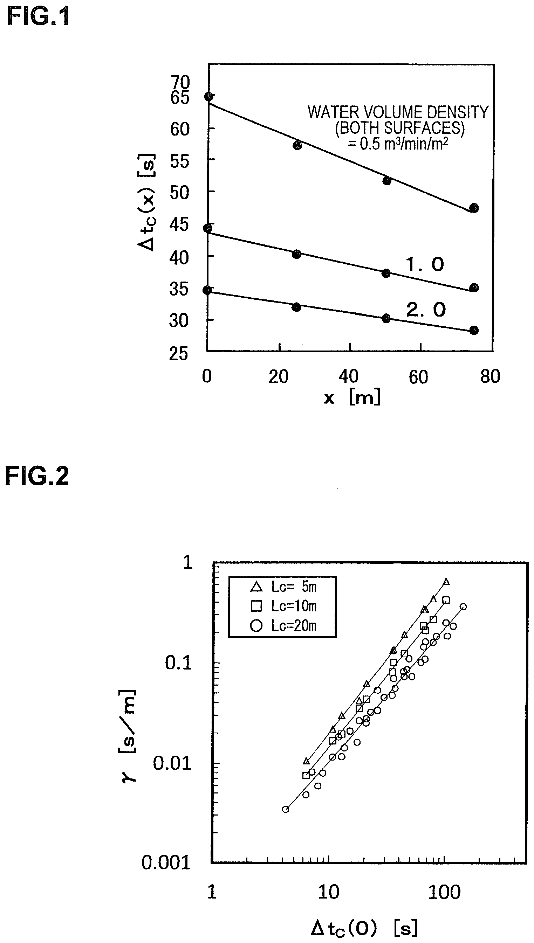

FIG. 1 is a graph illustrating examples of the results of the above simulation. In FIG. 1, the horizontal axis represents a conveyance-direction position in the H-beam relative to the leading end portion of the H-beam serving as a reference point (x=0), and the vertical axis represents the time required for the flange portions at each position in the conveyance direction of the H-beam to be cooled to the target temperature. Further, the simulation results in FIG. 1 were obtained under the condition that the target temperature was 600°C, the length of the water cooling zone was 10 m, and the thickness of the flange portions was 80 mm.

The simulation results in FIG. 1 show that the time required for the flange portions at the position x [m] in terms of the conveyance direction of the H-beam to be cooled to the target temperature (hereinafter, the water cooling time) $\Delta t_c(x)$ [s] decreases at a constant rate as the conveyance-direction position x varies. Further, though the decrease rate differs depending on the water volume density, the phenomenon that the water cooling time $\Delta t_c(x)$ decreases at the constant rate is seen even when the water volume density varies. Further, the results of simulations where the target temperature, the length of the water cooling zone, and the thickness of the flange portions were varied, though not illustrated, also show the aforesaid tendency that the water cooling time $\Delta t_c(x)$ decreases at a constant rate irrespective of the water volume density.

In other words, a relation between the position x in terms of the conveyance direction of the H-beam and the water cooling time $\Delta t_c(x)$ can be well regressed by a linear function represented by Formula (1) below, irrespective of the target temperature and so on. Note that $\gamma$ [s/m] represents the water cooling time decrease rate.

$$\Delta t_c(x) = \Delta t_c(0) - \gamma \cdot x \quad \text{... Formula (1)}$$

FIG. 2 is a graph illustrating examples of a relation between the water cooling time $\Delta t_c(0)$ of the flange portions of the H-beam at the leading end portion and the water cooling time decrease rate $\gamma$. The simulation results in FIG. 2 were obtained under the conditions that the length $L_c$ of the water cooling zone was fixed at 5 m, 10 m, and 20 m, and the thickness of the flange portions, the length of the H-beam, the water volume density, and the target temperature were varied. However, the values used in the simulation satisfy the thickness of the flange portions: 20 to 120 mm, the length of the H-beam: 0 to 300 m, the water volume density: 0.5 to 2.0 m$^3$/min/m$^2$, and the target temperature: 500 to 700°C.

The simulation results in FIG. 2 show that the relation between the water cooling time $\Delta t_c(0)$ of the flange portions of the H-beam at the leading end portion and the water cooling time decrease rate $\gamma$ is such a relation that the water cooling time decrease rate $\gamma$ increases as the leading end water cooling time $\Delta t_c(0)$ increases. That is, FIG. 2 shows that the water cooling time decrease rate $\gamma$ is in a relation of an exponential function whose base is the leading end water cooling time $\Delta t_c(0)$. FIG. 2 also shows that an exponential regression coefficient of the exponential function varies with a change in the length $L_c$ of the water cooling zone to 5 m, 10 m, and 20 m, and the water cooling time decrease rate $\gamma$ is in a relation of an exponential function whose base is the length $L_c$ of the water cooling zone.

From the above regression analysis results, it follows that the relation between the leading end water cooling time $\Delta t_c(0)$ and the water cooling time decrease rate $\gamma$ and the relation between the length $L_c$ of the water cooling zone and the water cooling time decrease rate $\gamma$ can be well regressed by Formula (2) below using constant coefficients p, q1, q2. Note that Formula (2) is derived using, for example, a linear least squares method.

$$\gamma = p \cdot L_c^{q1} \cdot \Delta t_c(0)^{q2} \quad \text{... Formula (2)}$$

Note that the constant coefficients p, q1, and q2 in Formula (2) are often in ranges of $0.001 \leq p \leq 0.010$, $-1.5 \leq q1 \leq -0.2$, and $0.5 \leq q2 \leq 5$.

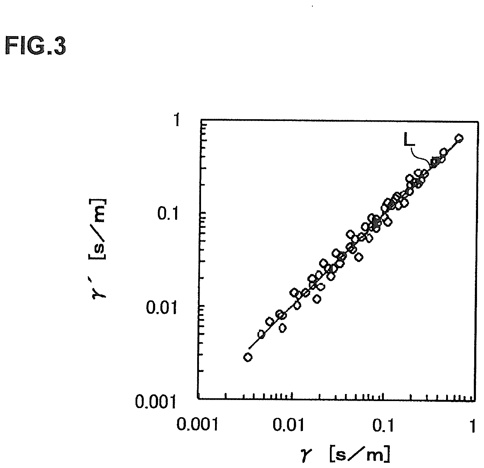

Here, Formula (2) above will be verified. FIG. 3 is a graph used to compare the above simulation results in FIG. 1 and FIG. 2 with calculation results based on Formula (2) above. In FIG. 3, the horizontal axis represents the water cooling time decrease rate $\gamma$ calculated in the simulation, and the vertical axis represents a water cooling time decrease rate $\gamma'$ calculated when the same condition as that of the simulation is given to Formula (2). That is, the water cooling time decrease rate $\gamma$ on the horizontal axis is calculated for each cross-sectional position in terms of the conveyance direction of the H-beam in each of the simulations performed under various cooling conditions. The water cooling time decrease rate $\gamma$ is what is called raw data calculated under each cooling condition. On the other hand, the water cooling time decrease rate $\gamma'$ on the vertical axis is calculated from Formula (2).

As illustrated, the water cooling time decrease rate $\gamma'$ calculated based on Formula (2) presents substantially the same values as those of the water cooling time decrease rate $\gamma$ calculated in the simulations. That is, the straight line L in the drawing indicates $\gamma = \gamma'$. The simulation results in FIG. 3 as a basis of the water cooling time decrease rate $\gamma$ on the horizontal axis and as a basis of the water cooling time decrease rate $\gamma'$ on the vertical axis are the same, and the straight line L indicates that the water cooling time decrease rate $\gamma$ can be calculated from simple Formula (2). That is, based on simple Formula (2), an appropriate water cooling time decrease rate can be precisely calculated. Therefore, an appropriate conveying speed of the H-beam during the water cooling can be precisely calculated.

As described above, the use of Formulas (1) and (2) above makes it possible to decide the water cooling time $\Delta t_c(x)$ for the whole length of the H-beam without using the repeated calculations, simply by finding only the water cooling time $\Delta t_c(0)$ of the leading end portion of the H-beam by numerical calculation or actual measurement, enabling a great reduction in the arithmetic processing cost.

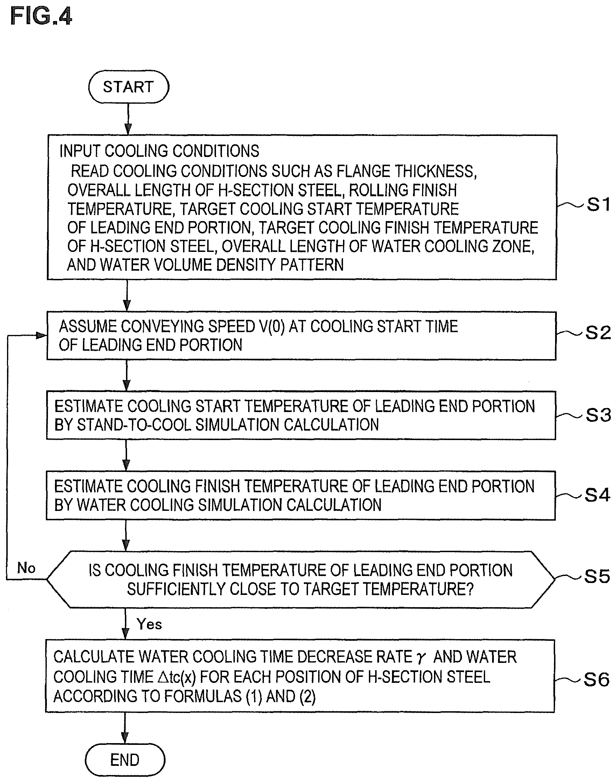

Next, a specific cooling control method based on the above findings will be described. FIG. 4 is a flowchart of the cooling control method of the H-beam.

(Step S1)

First, the cooling conditions such as the thickness of the flanges of the H-beam, the overall length of the H-beam, a rolling finish temperature, a target cooling start temperature of the leading end portion, a target cooling finish temperature of the H-beam, the overall length of the water cooling zone, and a water volume density pattern are read.

(Step S2)

Based on the above cooling conditions, a conveying speed V(0) at the start of the cooling of the leading end portion is assumed. However, before the actual cooling control, the conveying speed V(0) to be assumed for each cooling condition in a predetermined range is decided in advance based on past accelerated cooling results, simulations, or the like.

(Step S3)

Based on the conveying speed V(0) at the start of the cooling of the leading end portion assumed at Step S2, the rolling finish temperature, and so on, a cooling start temperature of the leading end portion is estimated by standing-to-cool simulation calculation. Note that, as this standing-to-cool simulation calculation, any known calculation method is selected. Further, at Step S3, it is confirmed if the estimated cooling start temperature of the leading end portion is within the range of the target cooling start temperature of the leading end portion.

When it is confirmed that the cooling start temperature of the leading end portion is not within the target cooling start temperature of the leading end portion, the conveying speed V(0) at the start of the cooling of the leading end portion is re-assumed according to a difference between the two temperatures, and the cooling start temperature of the leading end portion is re-estimated by the aforesaid method. The repeated calculation is performed until the cooling start temperature of the leading end portion falls within the range of the target cooling start temperature of the leading end portion. Note that a frequency with which the repeated calculation regarding the cooling start temperature of the leading end portion is performed at Step S3 is usually low, though depending on the conveying speed V(0) assumed at Step S2. Therefore, in the following, the number of repetition times and so on will be evaluated under the precondition that this repeated calculation is not performed.

(Step S4)

Based on the cooling start temperature of the leading end portion estimated at Step S3, a cooling finish temperature of the leading end portion is estimated based on water cooling simulation calculation or past cooling results. Note that any known calculation method is selected as this water cooling simulation calculation.

(Step S5)

It is confirmed if the cooling finish temperature of the leading end portion estimated at Step S4 is within the range of the target cooling finish temperature of the H-beam.

When it is confirmed at Step S5 that the cooling finish temperature of the leading end portion estimated at Step S4 is not within the range of the target cooling finish temperature of the H-beam, the control returns to Step S2, where the conveying speed V(0) at the cooling start of the leading end portion is re-assumed according to a difference between the two temperatures. Subsequently, Steps S3 to S5 are sequentially executed. Then, Steps S2 to S5 are repeated until the cooling finish temperature of the leading end portion falls within the range of the target cooling finish temperature of the H-beam.

(Step S6)

When it is confirmed at Step S5 that the cooling finish temperature of the leading end portion is within the target cooling finish temperature of the H-beam, the water cooling time decrease rate $\gamma$ and the water cooling time $\Delta t_c(x)$ at the position x of the H-beam are calculated based on Formulas (1) and (2) above.

Here, in the aforesaid cooling method of Patent Document 5, three repeated calculations, that is, the convergence calculation of the conveying speed Vin at the cooling start time, the convergence calculation of the conveying speed Vout at the cooling end time, and the optimization calculation of the cooling pattern, are performed. Specifically, as illustrated in FIG. 4 of Patent Document 5, the repeated calculation of Steps 3 to 8 is performed so as to converge the cooling finish temperature of the leading end portion in the target range, and the conveying speed Vin at the cooling start time is calculated. Further, the repeated calculation of Steps 3 to 10 is performed so as to converge the cooling finish temperature of the trailing end portion in the target range, and the conveying speed Vout at the cooling end time is calculated in the form where the convergence calculation of the conveying speed Vin at the cooling start time is included. Further, the repeated calculation of Steps 3 to 14 is performed to derive the optimum cooling pattern. Due to such three repeated calculations, the calculations are complicated and the arithmetic processing is costly.

In contrast, in this embodiment, the repeated calculation is performed so as to make the cooling finish temperature of the leading end portion fall within the target range as described above, but this is only one repeated calculation in this embodiment. Therefore, it is possible to complete the calculation in a much shorter time and reduce the arithmetic processing cost to a greater degree than conventionally.

The simulations illustrated in FIG. 1 and FIG. 2 are simulations when outer surfaces and inner surfaces of the flange portions of the H-beam are both cooled, but the present inventors also performed a simulation in a case where either the outer surfaces or the inner surfaces of the flange portions of the H-beam were only cooled. The present inventors also performed a simulation in a case where the steel material is not the H-beam, for example, it is a steel sheet (thick sheet). In both cases, similar results to the simulation results illustrated in FIG. 1 and FIG. 2 were obtained.

In other words, the cooling control method of this embodiment is applicable not only to the case where both surfaces of the H-beam are cooled but also to the case where one-side surfaces of the H-beam are cooled and the case where the steel material is not the H-beam. Examples of the steel material other than the H-beam include long steel materials that are continuously inserted to the water cooling zone to undergo heat treatment and temperature adjustment, such as a steel sheet (a thick sheet or a thin sheet), a steel pipe, a round steel bar, and a rail.

Next, the rolling facility and the cooling device of the H-beam which implement the above-described cooling control method of the H-beam will be described.

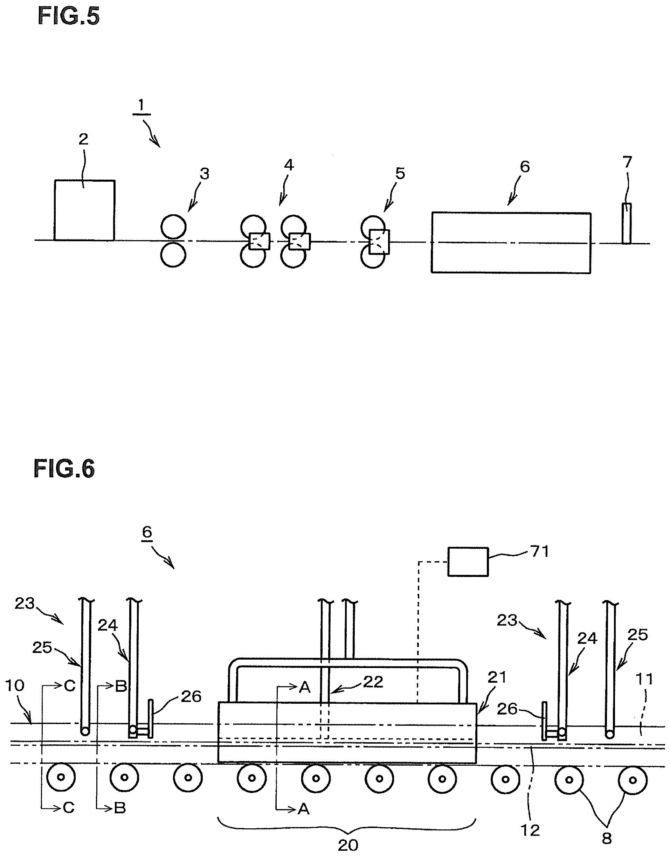

FIG. 5 is an explanatory view illustrating a schematic configuration of the rolling facility 1 of an H-beam. The rolling facility 1 includes, in order in the conveyance direction: a heating furnace 2 which heats a slab, a rough rolling mill 3 which rolls the slab heated in the heating furnace 2 into a substantially H shape, an intermediate rolling mill 4 which further rolls the slab into an H-shape close to a product shape, a finish rolling mill 5 which finish-rolls the slab into the product shape, the cooling device 6 which cools an H-beam 10 resulting from the finish rolling by the finish rolling mill 5 to a predetermined temperature, and a sawing device 7 which saws the H-beam 10 cooled in the cooling device 6 to a predetermined length. Note that the above configuration of the rolling facility 1 is a typical facility configuration, and a rolling facility of an H-beam to which the present invention is applied is not limited to this. The H-beam to which the cooling device 6 of the present invention is applied is mainly a large H-beam having, for example, a flange thickness of not less than 20 mm nor more than 140 mm, a flange width of about 200 mm or more, and a web height of about 400 mm or more, or further a web height of 600 mm or more.

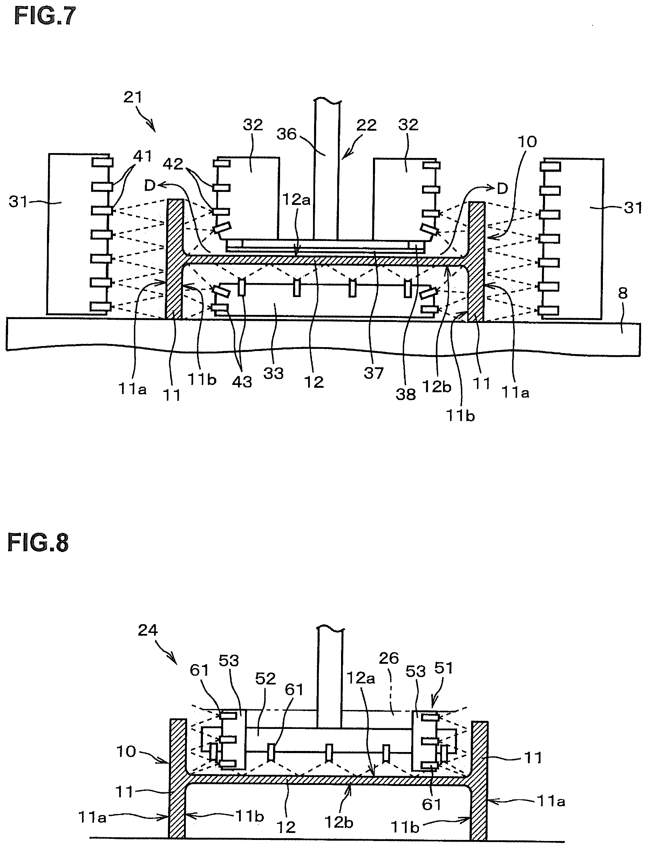

FIG. 6 is a side view illustrating the cooling device 6 according to the embodiment of the present invention, and FIG. 7 is a sectional view seen from the A-A line in FIG. 6. The cooling device 6 includes: a water cooling mechanism 21 which water-cools mainly flange portions 11 while the H-beam 10 conveyed by conveyor rollers 8 constituting a conveying mechanism according to the present invention passes in the water cooling zone 20; and an air blow mechanism 22 which sprays compressed air to a web upper surface 12a of the H-beam 10 while the H-beam 10 passes in the water cooling zone 20. It further includes draining mechanism units 23 which are provided in front of and in the rear of the water cooling zone 20 in terms of the conveyance direction. Note that the water cooling zone 20 is a region from a conveyance-direction foremost portion to rearmost portion of a cooling water collision region in the flange portions 11 when cooling water supplied from later-described nozzles 41, 42, 43 collides with the flange portions 11. The length of the water cooling zone 20 is, for example, 5 to 20 m.

As illustrated in FIG. 7, the water cooling mechanism 21 includes nozzle headers 31, 32, 33 which are located respectively on outer surface sides of the flange portions 11 of the H-beam 10, above the web portion 12 on inner surface sides of the flange portions 11, and under the web portion 12 on the inner surface side of the flange portions 11 and which are each provided with cooling water jet nozzles. The nozzle headers 31, 32, 33 are supplied with the cooling water.

First, when a relation between a water volume density (a cooling water amount per unit area on a water-cooled surface; $m^3/min/m^2$) necessary for achieving uniform strong cooling of the flange portions 11 of the H-beam 10 and material performance (tensile strength, toughness, and so on) was studied by a small steel billet test, the water volume density producing a sufficient accelerated cooling effect in the flange portions 11 was 0.5 $m^3/min/m^2$ or more. Therefore, in the water cooling zone 20, the cooling water jet nozzles are disposed so as to achieve this water volume density. Note that this water volume density differs depending on the material and size of the H-beam 10.

In the present invention, how the nozzles for cooling the flange portions 11 are arranged in the water cooling mechanism 21 is not limited, but for the strong cooling with a predetermined sufficient water volume density, they are desirably arranged such that the area of non-collision portions of surfaces to which the cooling water is jetted is minimized. Specifically, it is preferable that the nozzles are, for example, elliptical or perfectly circular full-cone nozzles, and the nozzles are arranged zigzag with the vertical-direction positions of nozzles adjacent in the conveyance direction being deviated so that the cooling water reaches the whole flange portions 11 of the H-beam 10 passing in the water cooling zone 20 without leaving any gap. Further, the nozzles are arranged with their jetting surfaces not interfering with one another so that the flange portions 11 are uniformly cooled. Further preferably, flange outer surfaces 11a and flange inner surfaces 11b are cooled with the same water volume density so that a temperature gradient does not occur in the thickness direction of the flange portions 11. Further, to adapt to a size variation of the H-beam 10, preferably, the side nozzle headers 31 on the flange outer surface 11a sides are movable in the height direction of the web portion 12 of the H-beam 10 (left-right direction in FIG. 7) and, in the side nozzle headers 31, the nozzles 41 at each vertical position can be controlled to turn on/off independently.

Above the web portion 12 on the inner surface sides of the flange portions 11, the upper nozzle headers 32 are disposed as illustrated in FIG. 7. The nozzles 42 of the upper nozzle headers 32 are provided so as to jet the cooling water toward the flange inner surfaces 11b and toward R portions at boundaries of the flange inner surfaces 11b and the web upper surface 12a. For the large H-beam 10 whose flange portions 11 have a large thickness, it is not possible to sufficiently perform the accelerated cooling by cooling only the flange outer surfaces 11a, and therefore, the inner surface sides as well as the outer surface sides are strongly cooled. Further, to adapt to a size variation of the flange potions 11 of the cooling-target H-beam 10, in the upper nozzle headers 32, the nozzles 42 at each vertical position can be controlled to turn on/off independently.

Above the web portion 12, the air blow mechanism 22 is further provided. The air blow mechanism 22 includes: a compressed air jet plate 37 which sprays the compressed air supplied from a compressed air supply pipe 36, toward the web upper surface 12a in the whole region of the water cooling zone 20; and a fixed frame 38. The compressed air jet plate 37 and the fixed frame 38 are disposed above the web upper surface 12a all along the length of the water cooling zone 20, with the compressed air jet plate 37 being located, for example, about 20 to 50 mm apart upward from the web upper surface 12a. In the entire surface of the compressed air jet plate 37, jet ports are opened at appropriate intervals. Accordingly, when the compressed air is supplied into the fixed frame 38 from the compressed air supply pipe 36, the compressed air is sprayed to the web upper surface 12a through the jet ports of the compressed air jet plate 37. The compressed air supply pipe 36 is connected to a center portion of the fixed frame 38, that is, to one place thereof, or to a plurality of appropriate places thereof according to the length or the like of the water cooling zone 20.

Spraying the compressed air toward the web upper surface 12a by the air blow mechanism 22 makes it possible for the cooling water on the flange inner surfaces 11b to escape to the outer sides of the H-beam 10 as indicated by the arrows D in FIG. 7. This restrains the cooling water from flowing to or staying on the web upper surface 12a to prevent the over-cooling of the web upper surface 12a. A pressure of the air jetted by the air blow mechanism 22 is preferably 0.02 to 0.3 MPa. According to experiments by the present inventors, the jet pressure lower than the lower limit of these values and that higher than the upper limit of these values are not preferable because the former results in the insufficient draining of the web upper surface 12a, and the latter results in the furious scattering of the cooling water on the flange inner surfaces 11b to disturb the flow on the water-cooled portions. On the other hand, it is known that, with the jet pressure not higher than the upper limit value nor lower than the lower limit value of these values, it is possible to completely prevent the cooling water from flowing to or staying on the web upper surface 12a.

As illustrated in FIG. 7, under the web portion 12 on the inner surface side of the flange portions 11, the lower nozzle header 33 is disposed. The lower nozzle header 33 is provided with the nozzles 43 which are directed toward the flange inner surfaces 11b, R portions at boundaries of the flange inner surfaces 11b and a web lower surface 12b, and the web lower surface 12b.

In this embodiment, the cooling water is not jetted to the web upper surface 12a, but the web upper surface 12a is slightly cooled by the compressed air, the cooling water slightly entering it from the flange inner surfaces 11b, and water from later-described water-draining mechanisms 24. Therefore, to prevent the occurrence of dimensional distortion of the web portion 12 due to a temperature gradient in its thickness direction, the web lower surface 12b is water-cooled. The detailed arrangement of the nozzles 43 of the lower nozzle header 33 is not limited, but the lower nozzle header 33 jets the cooling water to the flange inner surfaces 11b similarly to the upper nozzle headers 32, and weakly cools the web lower surface 12b to a degree commensurate with a temperature decrease of the web upper surface 12a, thereby preventing over-cooling. As the arrangement of the nozzles 43 for cooling the web lower surface 12b, the nozzle 43 is installed at one place in each of front and rear ends of the water cooling zone 20, and may be additionally installed at about one to three places in the water cooling zone 20 as needed.

In the embodiment illustrated in FIG. 7, as the upper nozzle headers 32, those produced according to the size of the web portion 12 are used. Further, as the lower header 33, one produced according to the sizes of both the flange portions 11 and the web portion 12 is used. Alternatively, it is also possible to adapt the upper nozzle headers 32 to an H-beam 10 having an optional size by separating the upper nozzle headers 32 and the air blow mechanism 22 and making their installation positions variable. Further, it is also possible to adapt the lower nozzle header 33 to an H-beam 10 having an optional size by connecting the nozzles for cooling the flange inner surfaces 11b and the nozzles for cooling the web lower surface 12b to different pipes and making their installation positions variable.

In this embodiment, to prevent the flow of the water to the front and rear of the cooling device 6 and sweep out the residual water on the web upper surface 12a, the draining mechanism units 23 are provided both in front of and in the rear of the water cooling zone 20 as illustrated in FIG. 6. The draining mechanism units 23 include the water-draining mechanisms 24 provided in front of and in the rear of the water cooling zone 20, air-draining mechanisms 25 provided at positions more apart from the water cooling zone 20 than the water-draining mechanisms 24 on both sides, and dam plates 26 provided at positions near the water-draining mechanisms 24 on both sides and closer to the water cooling zone 20 than the water-draining mechanisms 24. Only with the air-draining mechanisms 25, it is possible to sweep out the residual water if the compressed air with sufficient pressure and volume is supplied, but to sweep out a large volume of the residual water due to, for example, a strong water cooling condition, the water-draining mechanisms 24 are preferably co-used.

The water-draining mechanisms 24 spray the water toward the whole inner surface sides of an upper portion of the H-beam 10, that is, toward the flange inner surfaces 11b on the upper side of the web portion 12 and the web upper surface 12a to thereby restrain the cooling water by the water cooling mechanism 21 from flowing to the web upper surface 12a of the H-beam 10 before and after it passes in the water cooling zone 20. As illustrated in FIG. 8, the water-draining mechanisms 24 each have a draining nozzle header 51 disposed above the web portion 12. The draining nozzle header 51 is composed of a horizontal header 52 parallel to the web upper surface 12a and two vertical headers 53 provided on the left and right sides in parallel to the flange portions 11, and these headers each have, for example, one row of nozzles 61. The draining nozzle header 51 is supplied with cooling water from a water feed header (not illustrated). A jetting direction of the water from each of the nozzles 61 is preferably inclined toward the water cooling zone 20 so that the water reaches the whole upper portion on the inner surface side of the H-beam 10 without leaving any gap. Consequently, the water flowing from the water cooling zone 20 is discharged outside the H-beam 10, and it is possible to prevent the over-cooling ascribable to the water stagnant on the web upper surface 12a of the H-beam 10 in front of and in the rear of the cooling device 6.

The dam plates 26 are provided along substantially the entire height of the web portion 12 (the left-right direction at the time of the conveyance) and extend from a position, for example, about 20 mm above the web upper surface 12a up to a position higher than an upper end of the conveyed H-beam 10.

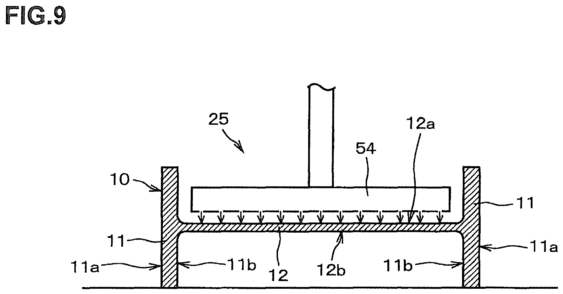

The air-draining mechanisms 25 jet compressed air toward the web upper surface 12a to thereby discharge the water which flows along the web upper surface 12a from the water cooling mechanism 21 and the water-draining mechanisms 24, to the outside of the H-beam 10 to intercept the flow of the water to the front and the rear of the cooling device 6. As illustrated in FIG. 9, the air-draining mechanisms 25 each have a draining pipe 54 connected to an air header (not illustrated). The draining pipes 54 are each constituted by a horizontal pipe parallel to the web upper surface 12a and have compressed air blow ports directed toward the web upper surface 12a and arranged at a plurality of places in the height direction of the web portion 12 (left-right direction in FIG. 9). Note that the draining mechanism units 23 each may only include the water-draining mechanism 24, but additionally providing the air-draining mechanism 25 further improves draining capability.

A jet pressure of the water or the air of the draining mechanism units 23 differs depending on the kind, the accelerated cooling condition, and so on of the H-beam 10, but in the case where the water-draining mechanisms 24 and the air-draining mechanisms 25 are co-used, the jet pressure of the water of the water-draining mechanisms 24 is preferably, for example, 0.1 to 0.5 MPa, and the jet pressure of the air of the air-draining mechanisms 25 is preferably, for example, 0.02 to 0.3 MPa. Further, in the case where the draining mechanism units 23 each have only the water-draining mechanism 24, the jet pressure of the water is preferably 0.2 to 0.6 MPa. According to experiments by the inventors, it is known that the jet pressure lower than the lower limit of these values and the jet pressure higher than the upper limit of these values are not preferable because the former leads to insufficient draining and the latter leads to the furious scattering of the cooling water to disturb the flow of the water cooled portions, but with the jet pressure not higher than the upper limit nor lower than the lower limit of these values, it is possible to completely sweep out the stagnant water.

As illustrated in FIG. 6, the cooling device 6 is provided with a control unit 71. The control unit 71 is, for example, a computer, and has a program storage part (not illustrated). In the program storage part, a program for executing the cooling control method illustrated in FIG. 4 is stored. In the program storage part, a program for controlling the conveyor rollers 8 constituting the conveying mechanism, the water cooling mechanism 21, and so on is also stored.

In the cooling device 6 according to this embodiment, from the length $L_c$ of the water cooling zone 20 and the leading end water cooling time $\Delta t_c(0)$, the control unit 71 calculates the water cooling time decrease rate $\gamma$ and the water cooling time $\Delta t_c(x)$ of the position x of the leading end H-beam based on the flowchart in FIG. 4 using Formulas (1) and (2) above. The control unit 71 further calculates the conveying speed of the H-beam 10 from the water cooling time decrease rate $\gamma$ and the water cooling time $\Delta t_c(x)$ and controls the conveyor rollers 8 and the water cooling mechanism 21 based on the calculated results. Then, the cooling device 6 cools the H-beam 10 while conveying it.

Therefore, the cooling device 6 according to this embodiment is capable of cooling the H-beam without causing a leading-trailing end temperature difference in the H-beam having undergone the cooling. Therefore, the obtained H-beam can satisfy required performance over its whole length.

Note that an average speed $u_R(x)$ of the conveyance-direction position (x) of the H-beam 10 during the accelerated cooling can be expressed by Formula (3) below.

$$u_R(x) = L_c/\Delta t_c(x) \quad \text{... Formula (3)}$$

Therefore, by water-cooling the H-beam 10 while adjusting its conveying speed based on Formulas (1), (2), and (3) above, it is possible for the H-beam having undergone the cooling to have a minimized leading-trailing end temperature difference.

Incidentally, in many of large H-beams, since a web thickness is smaller than a flange thickness and in addition, residual water is easily stagnant on the web upper surface 12a after the cooling, a conventional cooling method of an H-beam sometimes over-cools the web portion 12. According to the present invention, it is possible to restrain the over-cooling of the web portion 12 while strongly water-cooling the flange portions 11 from both inner and outer sides with a water volume density of 0.5 $m^3/min/m^2$ or more. That is, by executing the strong cooling in which the cooling speed during the accelerated cooling of the H-beam 10 and the water cooling stop temperature are controlled, it is possible to maintain material performance and prevent the over-cooling of the web portion 12, thereby reducing the occurrence of a poor shape such as a web wave and obtaining sawing property. Therefore, as a large H-beam product used as beams, pillars, and so on of large-scale buildings, it is possible to manufacture a high-quality product by the accelerated cooling treatment with a reduced alloy cost.

Further, in the cooling device 6 according to this embodiment, it is possible to easily decide the conveying speed of the H-beam as the cooling condition, from the regression formula which is based on the simulation results. Further, the aforesaid regression formula is applicable to an H-beam of any length.

Incidentally, the cooling device 6 according to this embodiment is suitably used in a case where the length of the cooling zone is small for the whole length of the H-beam, in other words, in a case where the rolling facility 1 where the cooling device 6 is provided is small and the cooling zone cannot have a long length.

Further, the regression formula expressing the relation between the leading end water cooling time $\Delta t_c(0)$ and the water cooling time decrease rate $\gamma$ and the relation between the length $L_c$ of the water cooling zone 20 and the water cooling time decrease rate $\gamma$ is not limited to Formula (2) above. Even if a steel material or a cooling condition (for example, the nozzle arrangement, the kind of a coolant, or the like) is changed, it is possible to improve the regression prediction accuracy of the water cooling time decrease rate $\gamma$ by using another regression formula, or by adjusting the constant coefficients even when the same regression formula is used. For example, in a case of a cooling device in which the length of the water cooling zone is limited to several kinds, a formula that is set for each length of the water cooling zone and in which the $L_c^{q1}$ term of Formula (2) is excluded, that is, "$\gamma = p \cdot \Delta t_c(0)^{q2}$" may be used, and the coefficients p and q2 may be changed depending on each length of the cooling zone.

Hitherto, a suitable embodiment of the present invention has been described, but the present invention is not limited to the above example. It is obvious that those skilled in the art could arrive at various changed examples or modified examples within the scope of the technical idea defined in the claims, and they are naturally understood as belonging to the technical scope of the present invention.

It should be noted that the technical idea of the present invention is applicable not only to the cooling of the H-beam. It is also applicable to a technique in which, while a long steel material continuously inserted to the water cooling zone and undergoes heat treatment and temperature adjustment, such as, for example, a steel sheet (a thick sheet or a thin sheet), a steel pipe, a round steel bar, or a rail, is continuously conveyed in the longitudinal direction, the steel material is cooled by passing in a cooling zone shorter than the steel material length.

Further, even in a case where the water cooling zone has a distribution of cooling ability, that is, even in a case where the water volume density varies depending on each zone of the water cooling zone, the present invention is applicable if the distribution is fixed during the cooling of a cooling-target steel material. That is, the above-described cooling control method is applicable to each zone.

[Examples]

Examples of the present invention will be described. In the cooling device 6 of the rolling facility 1, 1000 H-beams were subjected to accelerated cooling under the following cooling condition. At this time, the control unit 71 of the cooling device 6 controls the cooling based on the flowchart in FIG. 4 using Formulas (1) and (2) described above. As a result, it was possible to control a cooling finish temperature within a target cooling finish temperature all through their leading ends to their trailing ends.

(Cooling condition)

thickness of the flange portions 11: 20 to 120 mm
width of the flange portions 11: 300 to 450 mm
rolling length of the rolling facility 1: 250 m
length of the water cooling zone 20: 10 m
cooling start temperature: 800 to 950°C
water cooling finish temperature: 500 to 700°C
water volume density: 0.5 to 5 m³/min/m²

[Industrial Applicability]

The present invention is applicable to a cooling device and a cooling method which perform accelerated cooling treatment after finish rolling in the manufacture of a large H-beam used as beams, pillars, and so on of super high-rise buildings. Further, the present invention is also applicable to steel materials other than the large H-beam, that is, it is applicable to long steel materials such as a steel sheet (a thick sheet or a thin sheet), a steel pipe, a round steel bar, and a rail as described above.

[Explanation of Codes]

| | |
|---|---|
| 1 | rolling facility |
| 2 | heating furnace |
| 3 | rough rolling mill |
| 4 | intermediate rolling mill |
| 5 | finish rolling mill |
| 6 | cooling device |
| 7 | sawing device |
| 8 | conveyor roller |
| 10 | H-beam |
| 11 | flange portion |
| 11a | flange outer surface |
| 11b | flange inner surface |
| 12 | web portion |
| 12a | web upper surface |
| 12b | web lower surface |
| 20 | water cooling zone |
| 21 | water cooling mechanism |
| 22 | air blow mechanism |
| 23 | draining mechanism unit |
| 24 | water-draining mechanism |
| 25 | air-draining mechanism |
| 26 | dam plate |
| 31 | side nozzle header |
| 32 | upper nozzle header |
| 33 | lower nozzle header |
| 36 | compressed air supply pipe |
| 37 | compressed air jet plate |
| 38 | fixed frame |
| 41, 42, 43 | nozzle |
| 51 | draining nozzle header |
| 52 | horizontal header |
| 53 | vertical header |
| 54 | draining pipe |
| 61 | nozzle |
| 71 | control unit |

**Claims**

1. A steel material cooling device which is a device to cool a steel material having undergone hot rolling mills, the device comprising:

   a conveying mechanism which conveys the steel material while accelerating the steel material;
   a water cooling mechanism which cools the steel material while the conveying mechanism conveys the steel material; and
   a control unit which controls the conveying mechanism and the water cooling mechanism to cause the cooling of the steel material to satisfy Formula (1) below,
   wherein a water cooling time decrease rate $\gamma$ in Formula (1) below is decided based on a length of a water cooling zone where the water cooling mechanism is provided and a time $\Delta t_c(0)$ required to cool a leading end portion of the steel material down to a target temperature,

$$\Delta t_c(x) = \Delta t_c(0) - \gamma \cdot x \quad \text{... Formula (1),}$$

where x: a conveyance-direction position in the steel material relative to the leading end portion of the steel material serving as a reference point, and $\Delta t_c(x)$: a time required to cool a portion at the position x of the steel material down to the target temperature.

2. The steel material cooling device according to claim 1, wherein the water cooling time decrease rate $\gamma$ satisfies Formula (2) below,

$$\gamma = p \cdot L_c^{q1} \cdot \Delta t_c(0)^{q2} \quad \text{... Formula (2),}$$

where $L_c$: the length of the water cooling zone, and p, q1, q2: constant coefficients.

3. The steel material cooling device according to claim 1 or 2,
   wherein the steel material is an H-beam, and
   wherein the water cooling mechanism cools flange portions of the H-beam.

4. The steel material cooling device according to claim 3, comprising:

   an air blow mechanism which sprays compressed air toward a web upper surface of the H-beam in the water cooling zone; and
   draining mechanism units which are provided in front of and in the rear of the water cooling zone in terms of a conveyance direction of the H-beam to drain water on the web upper surface of the H-beam to the outside of the H-beam.

5. The steel material cooling device according to claim 4, wherein the draining mechanism units each include: an air-draining mechanism which sprays air to the web upper surface of the H-beam; and a water-draining mechanism which is provided at a position closer to the water cooling zone than the air-draining mechanism to spray water to the web upper surface and a flange inner surface of the H-beam.

6. The steel material cooling device according to claim 5, wherein a water volume density of cooling water of the water cooling mechanism is 0.5 $m^3/min/m^2$ or more, a jet pressure of the water of the water-draining mechanisms is 0.1 to 0.5 MPa, and a jet pressure of the air of the air-draining mechanisms is 0.02 to 0.3 MPa.

7. The steel material cooling device according to any one of claims 4 to 6, wherein a jet pressure of the air of the air blow mechanism is 0.02 to 0.3 MPa.

8. A steel material cooling control method which is a control method when a steel material having undergone hot rolling mills is cooled by a water cooling mechanism while the steel material is conveyed in an accelerated manner, the method comprising:

   a step of deciding a water cooling time decrease rate $\gamma$ based on a length of a water cooling zone where the water cooling mechanism is provided and a time $\Delta t_c(0)$ required to cool a leading end portion of the steel material down to a target temperature; and
   a step of controlling the cooling of the steel material so as to satisfy Formula (1) below using the water cooling time decrease rate $\gamma$,

$$\Delta t_c(x) = \Delta t_c(0) - \gamma \cdot x \quad \text{... Formula (1),}$$

   where x: a conveyance-direction position in the steel material relative to the leading end portion of the steel material serving as a reference point, and $\Delta t_c(x)$: a time required to cool a portion at the position x of the steel material down to the target temperature.

9. The steel material cooling control method according to claim 8, wherein the water cooling time decrease rate $\gamma$ satisfies Formula (2) below,

$$\gamma = p \cdot L_c{}^{q1} \cdot \Delta t_c(0)^{q2} \quad \dots \text{Formula (2),}$$

where $L_c$: the length of the water cooling zone and p, q1, q2: constant coefficients.

## FIG.1

## FIG.2

FIG.3

# FIG.4

START

INPUT COOLING CONDITIONS
READ COOLING CONDITIONS SUCH AS FLANGE THICKNESS, OVERALL LENGTH OF H-SECTION STEEL, ROLLING FINISH TEMPERATURE, TARGET COOLING START TEMPERATURE OF LEADING END PORTION, TARGET COOLING FINISH TEMPERATURE OF H-SECTION STEEL, OVERALL LENGTH OF WATER COOLING ZONE, AND WATER VOLUME DENSITY PATTERN — S1

ASSUME CONVEYING SPEED V(0) AT COOLING START TIME OF LEADING END PORTION — S2

ESTIMATE COOLING START TEMPERATURE OF LEADING END PORTION BY STAND-TO-COOL SIMULATION CALCULATION — S3

ESTIMATE COOLING FINISH TEMPERATURE OF LEADING END PORTION BY WATER COOLING SIMULATION CALCULATION — S4

IS COOLING FINISH TEMPERATURE OF LEADING END PORTION SUFFICIENTLY CLOSE TO TARGET TEMPERATURE? — S5

No

Yes

CALCULATE WATER COOLING TIME DECREASE RATE $\gamma$ AND WATER COOLING TIME $\Delta tc(x)$ FOR EACH POSITION OF H-SECTION STEEL ACCORDING TO FORMULAS (1) AND (2) — S6

END

# FIG.5

# FIG.6

FIG.7

FIG.8

FIG.9

# EP 3 626 358 A1

<table>
<tr><td colspan="2" style="text-align:center"><b>INTERNATIONAL SEARCH REPORT</b></td><td>International application No.<br>PCT/JP2018/034066</td></tr>
</table>

**A. CLASSIFICATION OF SUBJECT MATTER**
Int.Cl. B21B45/02(2006.01)i, C21D9/00(2006.01)i

According to International Patent Classification (IPC) or to both national classification and IPC

**B. FIELDS SEARCHED**

Minimum documentation searched (classification system followed by classification symbols)
Int.Cl. B21B45/02, C21D9/00

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 6-218422 A (KAWASAKI STEEL CORP.) 09 August 1994, entire text (Family: none) | 1-9 |
| A | JP 10-85822 A (NKK CORP.) 07 April 1998, entire text (Family: none) | 1-9 |

☐ Further documents are listed in the continuation of Box C.  ☐ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| 05 December 2018 (05.12.2018) | 18 December 2018 (18.12.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20130034216
- CN 103357678
- JP 3546300 B
- JP 60087914 A
- JP 10071416 A